(19) **Europäisches Patentamt / European Patent Office / Office européen des brevets**

(11) **EP 2 874 214 B1**

(12) ## EUROPEAN PATENT SPECIFICATION

(45) Date of publication and mention of the grant of the patent:
**07.03.2018 Bulletin 2018/10**

(21) Application number: **13816682.2**

(22) Date of filing: **11.07.2013**

(51) Int Cl.:
*H01M 4/66* (2006.01)    *H01G 11/66* (2013.01)
*H01M 4/13* (2010.01)    *H01M 4/64* (2006.01)

(86) International application number:
**PCT/JP2013/069055**

(87) International publication number:
**WO 2014/010707 (16.01.2014 Gazette 2014/03)**

(54) **CURRENT COLLECTOR FOIL, ELECTRODE STRUCTURE, LITHIUM SECONDARY CELL, OR ELECTRIC DOUBLE-LAYER CAPACITOR**

STROMABNEHMERFOLIE, ELEKTRODENSTRUKTUR, LITHIUMSEKUNDÄRZELLE ODER ELEKTRISCHER DOPPELSCHICHTKONDENSATOR

FEUILLE DE COLLECTEUR DE COURANT, STRUCTURE D'ÉLECTRODE, CELLULE SECONDAIRE AU LITHIUM, OU CONDENSATEUR ÉLECTRIQUE À DOUBLE COUCHE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.07.2012 JP 2012157624**

(43) Date of publication of application:
**20.05.2015 Bulletin 2015/21**

(73) Proprietors:
• **Furukawa Electric Co., Ltd.**
  **Chiyoda-ku**
  **Tokyo 100-8322 (JP)**
• **UACJ Foil Corporation**
  **Chuo-ku**
  **Tokyo**
  **1030026 (JP)**
• **UACJ Corporation**
  **Tokyo 100-0004 (JP)**

(72) Inventors:
• **ITO, Takayori**
  **Tokyo 100-8322 (JP)**
• **MORISHIMA, Yasumasa**
  **Tokyo 100-8322 (JP)**
• **HARA, Hidekazu**
  **Tokyo 100-8322 (JP)**
• **IIDA, Takahiro**
  **Tokyo 100-8322 (JP)**

• **KATAOKA, Tsugio**
  **Kusatsu-shi**
  **Shiga 525-0042 (JP)**
• **INOUE, Mitsuya**
  **Kusatsu-shi**
  **Shiga 525-0042 (JP)**
• **YAMABE, Satoshi**
  **Kusatsu-shi**
  **Shiga 525-0042 (JP)**
• **KATO, Osamu**
  **Tokyo 100-0004 (JP)**
• **HONKAWA, Yukiou**
  **Tokyo 100-0004 (JP)**
• **SAITO, Sohei**
  **Tokyo 100-0004 (JP)**
• **YAEGASHI, Tatsuhiro**
  **Tokyo 100-0004 (JP)**

(74) Representative: **Gulde & Partner**
  **Patent- und Rechtsanwaltskanzlei mbB**
  **Wallstraße 58/59**
  **10179 Berlin (DE)**

(56) References cited:
  **WO-A1-2009/084540      JP-A- 2009 295 474**
  **JP-A- 2010 153 224      JP-A- 2010 171 366**
  **JP-A- 2011 057 992      JP-A- 2013 077 702**
  **US-A1- 2009 017 381**

EP 2 874 214 B1

**Description**

TECHNICAL FIELD

The present invention relates to a current collector foil, an electrode structure, a lithium secondary battery or an electrical double layer capacitor.

BACKGROUND

Conventionally, a surface of a metal foil has been roughened to use the metal foil as a current collector, and a battery electrode comprising an active material layer laminated onto this current collector has been known. For example, Patent Literature 1 discloses the following current collector foil. Specifically, regarding a positive electrode current collector foil, the one prepared by forming a carbon coat layer comprising carbon powders (carbon particles) on a metal foil comprising an aluminum foil, and then forming an active material layer comprising a composite oxide of a transition metal including lithium ion on the carbon coat layer, is disclosed. In addition, JP 2010-212167 A discloses that favorable battery characteristics can be obtained by regulating the surface roughness Ra of the current collector in the range of 0.5 to 1.0 $\mu$m.

US 2009/0017381 A1 discloses a current collector with an active material layer formed thereon, wherein the active material layer contains an active material, conductive carbon particles, and a binder. The surface of the foil is roughened to such a degree that the surface area increases by several times to about 120 times, in order to minimize the influence of the resistance by the oxide film. Acetylene black used as conductive particles has a size D50 of 35 nm.JP 2010-153224 A discloses an electrode comprising a current collector and an active material layer provided thereon comprising active material particles. The surface roughness of the foil is preferably 0.3 < Ra < 5 $\mu$m and 3 < Rz < 30 $\mu$m, in order to allow the slurry for the active material layer to enter concave-convex portions of the resin, thereby reducing the resistance between the active material layer and the current collector. The conductive filler has a size of 20 to 30 nm.

SUMMARY OF THE INVENTION

PROBLEMS TO BE SOLVED BY THE INVENTION

However, depending on the size of the active material in the active material layer layered on the current collector foil, there are problematic cases where a satisfying discharge rate characteristics cannot be realized, such as in a case where an active material of small particle diameter is used for increasing the energy density.

The present invention has been made by taking the aforementioned circumstances into consideration. An object of the present invention is to provide a current collector foil; and an electrode structure, a lithium secondary battery or an electrical double layer capacitor using such current collector foil; which can achieve superior discharge rate characteristics.

MEANS TO SOLVE THE PROBLEM

According to the present invention, a current collector foil for forming thereon an active material layer containing active material particles, wherein: the current collector foil is provided with a roughened portion; a cross sectional curve of the roughened portion has a box counting dimension of 1.1 or higher; and an average length of waviness motif AW of the cross-sectional curve of the roughened portion is longer than twice of D10, D10 being a particle diameter of the active material particle in particle size cumulative distribution, the active material particles being used for the active material layer formed on the current collector foil; is provided.

According to this current collector foil, the box counting dimension (measured as described below) of the cross-sectional curve of the current collector is 1.1 or higher. In addition, the current collector foil has a cross sectional shape (measured as described below) in which the average length of waviness motif AW of the cross-sectional curve of the roughened portion of the current collector foil is longer than the twice of D10, D10 being a particle diameter of the active material particles in particle size cumulative distribution, the active material particles being used for the active material layer formed on the current collector foil. Therefore, when the current collector foil is used for an electrode structure, a lithium secondary battery or an electrical double layer capacitor, superior discharge rate characteristics can be obtained.

In addition, according to the present invention, an electrode structure, a lithium secondary battery, or an electrical double layer capacitor comprising a current collector using the aforementioned current collector foil, and an active material layer containing active material particles, the active material layer being provided on the current collector; is provided.

Since the electrode structure, lithium secondary battery or the electrical double layer capacitor comprises the active material layer containing active material particles, the active material layer being provided on the current collector using the aforementioned current collector foil, superior discharge rate characteristic can be obtained.

## EFFECT OF THE INVENTION

According to the present invention, a current collector foil capable of achieving superior discharge rate characteristics, and an electrode structure, a lithium secondary battery, or an electrical double layer capacitor using such current collector foil can be obtained.

## BREIF DESCRIPTION OF THE DRAWINGS

[FIG. 1] FIG. 1 shows a cross sectional view of an electrode structure structured by using the current collector foil according to one embodiment of the present invention.
[FIG. 2] FIG. 2 shows a schematic view of a cross sectional curve obtained from the SEM image of the current collector foil according to one embodiment of the present invention.
[FIG. 3] FIG. 3 shows a cross sectional view of another electrode structure structured by using the current collector foil according to one embodiment of the present invention.

DESCRIPTION OF PREFERRED EMBODIMENTS

Hereinafter, the embodiments of the present invention will be described with reference to the drawings. Here, "A to B" in the present specification means A or more and B or less.

<Embodiment 1>

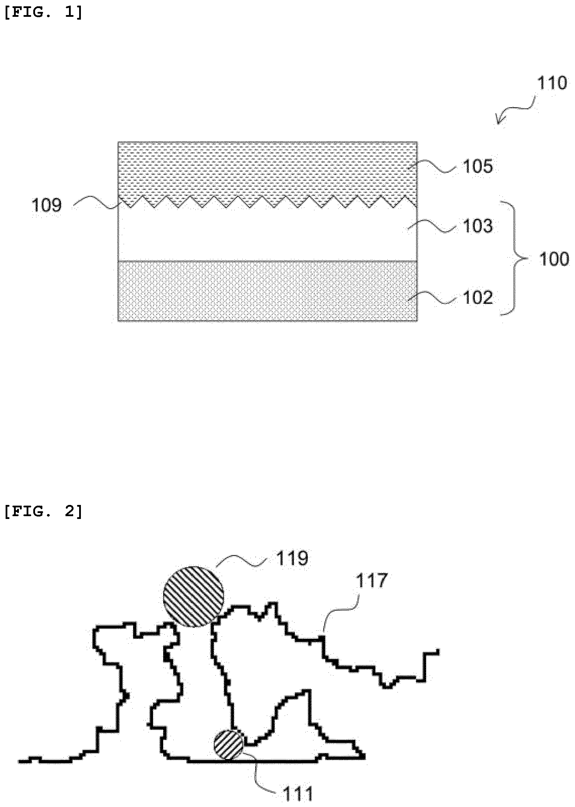

FIG. 1 shows a cross sectional view of an electrode structure structured by using the current collector foil according to one embodiment of the present invention. Current collector foil 100 of the present embodiment is a current collector foil 100 for providing thereon an active material layer 105 containing active material particles.
On a metal foil 102 structuring the current collector foil 100, a resin material layer 103 containing conductive particles and a binder resin is provided. A roughened portion 109 is structured by the resin material layer 103.
In the current collector foil 100 of the present embodiment, the box counting dimension of the cross-sectional curve of the roughened portion 109 is 1.1 or higher. In addition, average length of waviness motif AW of the cross-sectional curve of the roughened portion 109 is longer than the twice of D10, D10 being a particle diameter of active material particles in particle size cumulative distribution, the active material particles being used for the active material layer 105 formed on the current collector foil 100.
Accordingly, the electrode structure 110 being structured by using such current collector foil 100 can achieve superior discharge rate characteristics when used for a lithium secondary battery or an electrical double layer capacitor.
Hereinafter, each of the constituting elements will be described in detail.

(1) Metal Foil

As the metal foil 102 which can be used for the current collector foil 100 of the present embodiment, various types of metal foils used for the electrodes of a lithium secondary battery or an electrical double layer capacitor can be used. Specifically, various types of metal foils for positive electrodes and negative electrodes can be used. For example, metal foils of aluminum, copper, stainless steel, nickel, and the like can be used. Among these, from the viewpoint of the balance between the high conductivity and cost, aluminum foil and copper foil are preferably used. Here, in the present specification, aluminum means aluminum and aluminum alloy; and copper means pure copper and copper alloy. In the present embodiment, aluminum foil can suitably be used for the positive electrode side of the secondary battery, negative electrode side of the secondary battery, or the electrode of the electrical double layer capacitor; and the copper foil can suitably be used for the negative electrode side of the secondary battery.
There is no particular limitation regarding the aluminum foil. Here, various types of aluminum foils such as A1085 of pure aluminum type, A3003 and the like can be used. In addition, the same can be said for the copper foil, and there is no particular limitation. Here, rolled copper foil and electrolytic copper foil are preferably used. The thickness of the aluminum foil and the copper foil are adjusted depending on their intended application, and thus there is no particular limitation. Here, $5\mu m$ to $100\mu m$ is preferable. When the thickness is less than $5\mu m$, the strength of the foil may be insufficient, thereby making the formation of the active material layer and the like difficult. On the other hand, when the thickness exceeds 100μm, the other structuring components, especially the active material layer or the electrode material layer need be made thin to compensate with the increase in the foil thickness. Accordingly, especially in a case where such foil is used for the lithium secondary battery or the electrical storage device as the electrical double layer capacitor, the thickness of the active material layer need be thinned, resulting in cases where necessary and sufficient capacity cannot be achieved.

(2) Resin Material Layer

There is no particular limitation regarding the binder resin structuring the resin material layer 103 containing the conductive particles. Here, one type or a combination of two or more types of resins selected from the group consisting of a polyolefin resin, an SBR, a polyimide resin, cellulose and derivatives thereof, chitin and derivatives thereof, chitosan and derivatives thereof, an acryl resin, a butyral resin, a melamine resin, and an epoxy resin; can be used.

There is no particular limitation regarding the conductive particles structuring the resin material layer 103 containing the conductive particles. Here, metal fine particles, conductive carbon fine particles and the like can be used.

There is no particular limitation regarding the conductive carbon fine particles. Here, acetylene black, Ketchen black, vapor grown carbon fibers, graphite (black lead) and the like can be used. In particular, the one having an electrical resistance of $1 \times 10^{-1} \Omega \cdot cm$ or lower by the powder form, the powder being a pressurized powder body of 100% conductive carbon fine particles, is preferable. The aforementioned particles can be used in combination as necessary. There is no particular limitation regarding the particle size. Here, 10 to 100nm is generally preferable.

As a method for forming the resin material layer 103 containing the conductive particles on the metal foil 102, a method involving the formulation of a paste by dissolving the binder resin in a solvent followed by adding and mixing of the conductive particles, and then coating the paste thus obtained onto the metal foil 102 followed by drying; a method involving the formulation of a paste by dissolving the binder resin as emulsion particles in water followed by adding and mixing of the conductive particles, and then coating the paste thus obtained onto the metal foil 102 followed by drying; a method involving the formulation of a mixture by mixing the conductive particles and the binder resin in the form of fine powders, and then coating the mixture thus obtained onto the metal foil 102 followed by heating and melting of the binder resin; and the like can be mentioned. Here, the method for forming the resin material layer 103 is not particularly limited.

There is no particular limitation regarding the solvent used in the method involving the formulation of a paste by dissolving the binder resin in a solvent followed by adding and mixing of the conductive particles, and then coating the paste thus obtained onto the metal foil 102 followed by drying; so long as the conductive particles can be dispersed in the binder resin solution having the binder resin dissolved in the solvent.

There is no particular limitation regarding the method for coating the paste containing the conductive particles. Here, known methods such as a cast method, a bar coater method, a dip method, a gravure coat method and the like can be used. There is no particular limitation regarding the drying method. Here, drying can be carried out by a heating process using a hot air circulating oven.

There is no particular limitation regarding the thickness of the resin material layer 103 containing the conductive particles, the resin material layer 103 being formed by the heating process. Here, the thickness is preferably 0.1μm or more and 10μm or less. When the thickness is less than 0.1μm, it is unfavorable since the desired effect cannot be achieved. On the other hand, when the thickness exceeds 10μm, it is unfavorable since the ratio of the active material occupying the battery or the capacitor becomes relatively low.

(3) Roughened Portion

In the current collector foil 100 of the present embodiment, the roughened portion 109 is structured with the resin material layer 103. There is no limitation regarding the method for roughening the resin material layer 103. For example, in the current collector foil 100 of the present embodiment, the roughened portion 109 can be formed on the surface of the resin material layer 103 by using a method for layering the resin material layer 103 containing the conductive particles onto the metal foil 102. The method which forms the resin material layer 103 containing the conductive particles onto the metal foil 102 is suitable in view of productivity. Here, as a measure for forming the roughened portion 109, it is especially suitable to utilize the cohesiveness of the conductive particles. Specifically, Hansen solubility parameters for each of the binder resin, conductive particles, and the solvent are used as the indicator. Then, paste is formulated by using the binder resin, conductive particles, and the solvent; the conductive particles and the binder resin being selected so that the Hansen solubility parameter of the conductive particles is positioned outside the solubility sphere of the binder resin, and the binder resin, conductive particles, and the solvent being selected so that the Hansen solubility parameters of the conductive particles and the binder resin are positioned inside the solubility sphere of the solvent. In the aforementioned paste, a homogeneous paste can be obtained since the presence of the solvent allows favorable dispersion of the binder resin and the conductive particles in the paste. When the solvent is removed in the drying step after coating the paste, the conductive particles aggregate in the binder resin, thereby forming a roughened coating film.

The Hansen solubility parameters and the solubility spheres of the binder resin, the conductive particles, and the solvent can generally be determined by plotting the evaluation results of solubility and dispersibility with respect to the chemical substances, of which Hansen solubility parameter is known, in a three-dimensional coordinates known as the Hansen space. There is no particular limitation regarding the values of the Hansen solubility parameter. Here, the values shall be such that the Hansen solubility parameter of the conductive particles in positioned outside the solubility sphere of the binder resin, and the Hansen solubility parameters of the conductive particles and the binder resin are positioned inside the solubility sphere of the solvent.

(3-1) Box Counting Dimension of Roughened Portion

Conventionally, surface roughness Ra has been commonly used as a factor for describing the surface profile. However, the tracer method, and the method using the confocal laser scanning microscope or the AFM are all methods that measure the subject surface from the vertical direction, and are not suitable for describing a complex surface profile having an overhang shape.

When the particle diameter of the active material particles is especially small, the active material particles can come in contact with the current collector foil 100 by coming into the overhang shape portion of the current collector foil 100. Therefore, it is necessary to describe the surface profile in a more appropriate manner. Here, it is preferable to use the fractal dimension to describe a shape complicated by the overhang shape and the like, and it is further preferable to use the box counting dimension as one form of the fractal dimension, from the viewpoint that evaluation can be made easily from a digital image.

As a method for measuring the cross sectional curve for obtaining the aforementioned box counting dimension, usage of the three dimensional SEM (scanning electron microscope) is effective. The height of the measurement object can be calculated using a plurality of observation images obtained by a method using a plurality of detectors or a method which varies the angle of the stage for SEM observation. The cross sectional curve can be determined unambiguously by measuring the boundary curve at the edge of the current collector foil 100, the boundary curve being provided on the same plane as the section plane made by cutting the current collector foil 100 with microtome or ion milling.

When the SEM observation image is digitally processed, it is preferable to adjust the magnification during the SEM observation so that the 1 pixel length is the same with the primary particle diameter of the conductive particles, or is shorter than the primary particle diameter. When the 1 pixel length is longer than the primary particle diameter of the conductive particles, accurate evaluation of the cross sectional curve cannot be conducted. Specifically, in a case where acetylene black having a primary particle diameter of 30nm is used as the conductive particles, it is preferable to carry out the digital processing of the SEM observation image in a condition where 1 pixel length is 20nm.

The evaluation of the profile of the current collector foil 100 by SEM observation of the cross section can be conducted in a condition where the active material layer 105 is layered on the current collector foil 100, and is thus a useful method in view of quality management.

The image of the cross sectional curve is converted into a binary image by image processing, and then the binary image was divided into square lattices having a d pixel length as its side length, and the number of square lattice N(d) containing a cross sectional curve was counted. The box counting dimension, as generally known, can be obtained as follows. First, the length d is varied to values of 2d, 4d, 8d, 16d, 32d, 64d and the like, and the number of square lattice N(d) containing a cross sectional curve is counted for each of the varied length. Subsequently, the number of the square lattice N(d) is plotted against the length d, by double logarithm. The box counting dimension can be calculated from the slope of the line obtained by the plotting. It is preferable to obtain the box counting dimension as an average of the results obtained by the analysis of three different images of the cross sectional curve image taken by the same method and size.

Regarding the cross sectional curve obtained from the SEM image of a current collector foil without the active material layer 105, the image can be binarized by setting the image of the metal foil 102 and the resin material layer 103 to 1, and by setting the image of the vacuum portion without the metal foil 102 nor the resin material layer 103 to 0.

Regarding the current collector foil 100 of the present embodiment, the box counting dimension of the cross sectional curve at the roughened portion of the resin material layer 103 is 1.1 or higher. As shown in the Examples described later, the current collector foil 100 of the present embodiment shows superior high rate characteristics when the box counting dimension of the cross sectional curve at the roughened portion of the resin material layer 103 is 1.1 or higher, and shows further superior characteristics when the box counting dimension of the cross sectional curve is 1.2 or higher. On the other hand, when the cross sectional curve of the roughened portion of the resin material layer 103 of the current collector foil 100 of the present embodiment has a box counting dimension of lower than 1.1, the effect obtained by roughening the surface would be low, and thus there would be no difference in the high rate characteristics when compared with the case where a smooth metal foil without roughening is used as the current collector. Here, there is no particular limitation regarding the aforementioned box counting dimension. Examples of the box counting dimension are 1.1, 1.2, 1.3, 1.4, 1.5, and 1.6, and may be in the range of two values selected from the values exemplified herein.

FIG. 2 shows a schematic view of a cross sectional curve 117 obtained from the SEM image for calculating the box counting dimension of the roughened portion 109 of the current collector foil 100 of the present embodiment. The hatched circle located in the upper portion of FIG. 2 shows the active material particle 119 having a large particle diameter, and the hatched circle located in the lower portion of FIG. 2 shows the active material particle 111 having a small particle diameter. By calculating the box counting dimension as described, examination on whether the roughened portion 109 of the current collector foil 100 has a complicated surface profile such as the overhang shape, the overhang shape enabling the active material particles 111 having a small particle diameter to go into the overhang portion, can be conducted. Here, such complicated surface profile is suitable for achieving superior high rate characteristics.

(3-2) Average Length of Waviness Motif AW of Roughened Portion

In the current collector 100 of the present embodiment, the high rate characteristics such as the superior discharge rate cannot be achieved only by adjusting the box counting dimension of the cross sectional curve of the roughened portion 109. Here, the average length of waviness motif AW of the roughened portion 109 also has a large influence. The average length of waviness motif AW of the roughened portion 109 of the current collector foil 100 of the present embodiment can be obtained by the algorithms described in JIS B0631 "Surface Texture: Profile Method - Motif Parameters", using the cross sectional curve of the roughened portion 109 obtained by the tracer method, and methods using the confocal laser scanning microscope, SEM, and AFM. Here, the average length of waviness motif AW may also be obtained as follows. That is, the curve of the rolling circle waviness used in JIS B0610 "Surface Texture: Profile Method - Definitions and Designation of Rolling Circle Waviness" is obtained from the cross sectional curve of the roughened portion 109, and then the average length of waviness motif AW is obtained as the arithmetic average of the length between the peaks of the curve of the rolling circle waviness.

Specifically, the average length of waviness motif AW can be measured in accordance with JIS B0651 "Surface Texture: Profile Method - Nominal Characteristics of Contact (Stylus) Instruments" using the stylus-based profilometer. Here, when the cross sectional image is used, the 1 pixel length need to be less than approximately 13nm, considering a case where the difference in height is $2\mu m$. The actual measurement is carried out by using an image of 10000 magnifications (1 pixel length: 10nm) and calculating the average length of motif for five points.

In the current collector foil 100 of the present embodiment, the average length of waviness motif AW of the cross-sectional curve of the roughened portion 109 of the resin material layer 103 is longer than the twice of D10, D10 being a particle diameter of active material particles 107 in particle size cumulative distribution, the active material particles being used for the active material layer 105 formed on the current collector foil 100. In this case, as described in the Examples hereinafter, the high rate characteristics of the current collector foil 100 would be superior. It is preferable that the average length of waviness motif AW of the cross-sectional curve of the roughened portion of the resin material layer 103 is shorter than the twice of D90, D90 being a particle diameter of active material particles in particle size cumulative distribution, since the high rate characteristics of the current collector foil 100 would become superior. It is further preferable that the average length of waviness motif AW of the cross-sectional curve of the roughened portion 109 of the resin material layer 103 is longer than the twice of D10, D10 being a particle diameter of active material particles 107 in particle size cumulative distribution and shorter than the twice of D90, D90 being a particle diameter of active material particles 107 in particle size cumulative distribution. Here, the particle size distribution of the active material particles 107 is not the volume cumulative distribution, but is the number cumulative distribution.

Specifically, it is preferable that the average length of waviness motif AW is 0.02 to $200\mu m$. In other words, the average length of waviness motif AW can be, for example, 0.02, 0.05, 0.1, 0.5, 1, 5, 10, 20, 30, 40, 50, 100, 150, or $200\mu m$ and may be in the range of two values selected from the values exemplified herein.

The particle size cumulative distribution can be measured by general laser diffraction method or dynamic light scattering method. D1 is a particle diameter that corresponds to 10% in the cumulative distribution, and D90 is a particle diameter that corresponds to 90% in the cumulative distribution.

The current collector foil 100 of the present embodiment has a box counting dimension of 1.1 or higher, and the average length of waviness motif AW is longer than the twice of D10, D10 being a particle diameter of the active material particles 107 in particle size cumulative distribution, the active material particles being used for the active material layer 105 formed on the current collector foil 100. The high rate characteristics suitable for an electrode structure, a lithium secondary battery, or an electrical double layer capacitor can be obtained only by satisfying these conditions. When only one of these conditions is satisfied, superior high rate characteristics cannot be fully achieved. When the box counting dimension is lower than 1.1, the surface profile is not complicated enough for achieving superior high rate characteristics. On the other hand, when the average length of waviness motif AW is shorter than the twice of D10, D10 being a particle diameter of the active material particles 107 in particle size cumulative distribution, the current collector foil 100 and the particle diameter of the active material particles 107 used for the active material layer 105 would not be engaged, and thus superior high rate characteristics cannot be obtained.

<Embodiment 2>

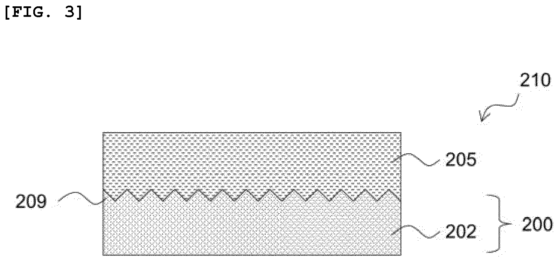

FIG. 3 shows a cross sectional view of a structure of an electrode structure structured by using the current collector foil according to Embodiment 2 of the present invention. The current collector foil 200 of the present Embodiment 2 basically has the same structure and effect as the current collector foil 100 of Embodiment 1, however, the structure is different in the following points.

Current collector foil 200 of Embodiment 2 is a current collector foil 200 for providing thereon an active material layer 205 containing active material particles. A roughened portion 209 is provided on the metal foil 202 structuring the current collector foil 200.

In the current collector foil 200 of Embodiment 2, the box counting dimension of the cross-sectional curve of the roughened portion 209 is 1.1 or higher. In addition, average length of waviness motif AW of the cross-sectional curve of the roughened portion 209 is longer than the twice of D10, D10 being a particle diameter of active material particles in particle size cumulative distribution, the active material particles being used for the active material layer 205 formed on the current collector foil 200.

Accordingly, the electrode structure 210 being structured by using such current collector foil 200 can achieve superior discharge rate characteristics when used in a lithium secondary battery or an electrical double layer capacitor.

In the current collector foil 200 of Embodiment 2, the roughened portion 209 is provided on the surface of metal foil 202. There is no particular limitation regarding the method for roughening the metal foil 202. For example, regarding the current collector foil 200 of Embodiment 2, the roughened portion 209 can be formed on the surface of the metal foil 202 by the methods of sand-blast, etching, and the like.

Accordingly, as shown in FIG. 3, after the surface of the metal foil 202 is roughened by sand-blast, etching and the like, the active material layer 205 is formed on the roughened portion 209 of the current collector 200, thereby forming the electrode structure 210.

The current collector 200 of Embodiment 2 differs from the current collector 100 of Embodiment 1 in that the resin material layer 103 is not provided. Therefore, current collector 200 has a similar structure and effect of the current collector 100 of Embodiment 1, and also achieves a thin electrode structure, since the resin material layer 103 is not provided. Accordingly, a distinctive effect of retaining larger volume of the active material layer 205 can be achieved.

<Embodiment 3>

The electrode structure of Embodiment 3 comprises the current collector using the current collector foil of the aforementioned Embodiments 1 to 2, and an active material layer containing active material particles, the active material layer being provided on the current collector. Since the electrode structure is provided with the active material layer containing the active material particles on the current collector using the aforementioned current collector foil, superior discharge rate characteristics can be achieved.

The active material particles contained in the active material layer of the electrode structure of Embodiment 3 may be either one of the positive electrode active material or the negative electrode active material. The positive electrode material of the secondary battery used for the positive electrode is not particularly limited, and is preferably a substance capable of occluding and releasing lithium (ion). Specifically, conventionally used lithium cobalt oxide ($LiCoO_2$), lithium manganese oxide ($LiMn_2O_4$), lithium nickel oxide ($LiNiO_2$ ternary lithium compounds of Co, Mn, and Ni ($Li(Co_xMn_yNi_z)O_2$), sulfur based compound ($TiS_2$), and olivine based compound ($LiFePO_4$) can be used.

As the negative active material of the secondary battery used for the negative electrode, known substances can be used. There is no particular limitation, and black leads such as graphite and the like, amorphous black leads, and oxides can be used for example.

As the active material used for the electrode of the electrical double layer capacitor, known substances can be used. There is no particular limitation, and black leads such as graphite and the like, amorphous black leads, and oxides can be used for example.

As the binder resin for binding the aforementioned active materials, a polyolefin resin, an SBR, a polyimide resin, cellulose and derivatives thereof, chitin and derivatives thereof, chitosan and derivatives thereof, an acryl resin, a butyral resin, a melamine resin, and an epoxy resin can be used, and is not limited to these.

A paste is prepared by mixing the aforementioned binder resin in the state dissolved in a solvent or in the state dispersed in water as emulsion particles, with the active material particles and the conductive assistant. Then, the paste thus obtained in coated on the aforementioned current collector foil and dried to structure the electrode.

<Embodiment 4>

The lithium ion secondary battery or the electrical double layer capacitor of Embodiment 4 comprises the current collector using the current collector foil of the aforementioned Embodiments 1 to 2, and an active material layer containing active material particles, the active material layer being provided on the current collector. Since the electrode structure is provided with the active material layer containing the active material particles on the current collector using the aforementioned current collector foil, superior discharge rate characteristics can be achieved. As the components other than the current collector foil of either one of the aforementioned Embodiment 1 and 2, known components for the secondary battery or the electrical double layer capacitor can be used.

The embodiments of the present invention have been described with reference to the drawings. Here, these embodiments are provided only as examples of the present invention, and the present invention can take various constituents other than the aforementioned ones.

**EXAMPLES**

Hereinafter, the present invention will be described specifically with reference to the Examples and Comparative Examples, however, the present invention shall not be limited to the following Examples.

(Example 1)

Glyceryl chitosan resin (7 parts by mass) and trimellitic acid (3 parts by mass) were dissolved in N-methyl-2-pyrrolidone (NMP, 90 parts by mass). Subsequently, acetylene black (6 parts by mass) was added and dispersed for 8 hours using a ball mill to give a coating for the resin material layer. By using a bar coater, the coating was coated onto one side of an aluminum foil having a thickness of $20\mu$m (JIS A1085), and then the foil was baked for 120 seconds with the substrate final temperature of 150°C. The resin material layer was coated by 0.5g/m$^2$.

(Example 2)

Nitrocellulose (JIS K6703 L1/4, 7 parts by mass), butylated melamine (average molecular weight: 4000, 7 parts by mass), and polyvinyl butyral (average molecular weight: 270000, 7 parts by mass) were dissolved in methyl ethyl ketone (MEK). Subsequently, acetylene black (20 parts by mass) was added and dispersed for 8 hours using a ball mill to give a coating for the resin material layer. By using a bar coater, the coating was coated onto one side of an aluminum foil having a thickness of $20\mu$m (JIS A1085), and then the foil was baked for 120 seconds with the substrate final temperature of 180°C. The resin material layer was coated by 0.5g/m$^2$.

(Example 3)

Acryl monomers (butyl acrylate (28 parts by mass), acrylonitrile (8 parts by mass), and acryl amide (48 parts by mass)) were polymerized to five an aqueous acryl emulsion. The weight average molecular weight of the acryl-based resin was adjusted to 300000. To this acryl emulsion, a crosslinker (methylol melamine, weight average molecular weight: 3000) was added, followed by addition of acetylene black to give a coating for the resin material layer. Here, acetylene black was added to the mixture while agitating with agitator (rotation number: 4000rpm) so that the total amount of acetylene black added would be 60 parts by mass with respect to 100 parts by mass of the solid content of the resin (acryl-based resin and crosslinker).

By using a bar coater, the coating was coated onto one side of an aluminum foil having a thickness of $20\mu$m (JIS A1085), and then the foil was baked for 2 minutes with the substrate final temperature of 190°C. Accordingly, the current collector foil was prepared.

(Comparative Example 1)

The sample was subjected to testing without providing the carbon black-containing resin material layer onto the A1085 foil used in the aforementioned Examples.

The electrodes prepared by using the current collector foils of Examples 1 to 3 and Comparative Example 1 were confirmed to have no peeling off.

(Evaluation of Cross Section of Current Collector)

The observation and evaluation of the cross section of the current collector foil shown in the aforementioned Examples and Comparative Example were conducted as follows. A thin test piece for SEM observation was prepared by cross sectional treatment of the current collector foil at ambient temperature using the Ultramicrotome and Histo Diamond Knife (available from Leica Microsystems). An image of the thin test piece was taken using the high resolution scanning electron microscope (available from Hitachi High-Technologies Corporation) to obtain the cross sectional curve.

EP 2 874 214 B1

The image with a magnification of 5000 was used. The 1 pixel length of the image observed corresponded to approximately 20nm.

The image of the cross sectional curve was divided into square lattices having 1 pixel length as its side length. Then, the number of square lattices N(1) having a cross sectional curve was counted. The side length of the square lattice was varied to 2 pixel length, 4 pixel length, 8 pixel length, 16 pixel length, 32 pixel length, and 64 pixel length, and the image of the cross sectional curve was divided into square lattices having these side lengths. The number of square lattices N(2), N(4), N(8), N(16), N(32), and N(64) having a cross sectional curve were counted for each of these side lengths. Subsequently, plotting was conducted with double logarithm by taking the length d of the square lattice as the horizontal axis and the number N(d) of the square lattices having a cross sectional curve as the vertical axis. The absolute value of the slope of the line obtained by the plotting was taken as the box counting dimension.

The average length of waviness motif AW was calculated in accordance with JIS B0631 "Surface Texture: Profile Method - Motif Parameters" (corresponding to the international standard of ISO 12085 1996), using a surface roughness measuring device. It was also confirmed that the results were consistent with the average length of waviness motif AW calculated from the cross sectional curve obtained from the observation image by SEM observation.

The profiles of the current collector foils are shown in Table 1.

[Table 1]

| | Example 1 | Example 2 | Example 3 | Comparative Example 1 |
|---|---|---|---|---|
| Box counting dimension [-] | 1.25 | 1.15 | 1.21 | 1.00 |
| Average length of waviness motif [$\mu$m] | 10.8 | 7.8 | 10.6 | (>20) |
| Average surface roughness [$\mu$m] | 0.4 | 0.3 | 0.3 | 0.2 |

(Preparation of Positive Electrode of Secondary Battery)

Each of the electrode materials shown below and the current collector foils provided in Table 1 were used to prepare the positive electrode samples.

- Positive electrode active material: lithium iron phosphate ($LiFePO_4$), particle diameter distribution: D10=0.$\mu$m, D50=1.8$\mu$m, D90=6.7$\mu$m.
- conductive material: acetylene black (AB)
- Binder: PVDF (poly vinylidene fluoride)
- Diluent: NMP (N-methyl-2-pyrrolidone)

The formulation ratio was as follows.
Formulation ratio of lithium iron phosphate-based positive electrode [wt%]

$$\mathtt{LiFePO_4/AB/PVDF = 90/5/5}$$

(Particle Size Distribution of Active Material)

The particle size distribution of the positive electrode active material was measured using a laser diffraction particle size analyzer. As the result of measurement, D10=0.6$\mu$m, D50=1.8$\mu$m, and D90=6.7$\mu$m were obtained.

$LiFePO_4$, AB, and PVDF-NMP solution were weighed so as to have the aforementioned formulation ratio, and were mixed. Subsequently, NMP was added to the mixture as a diluent to adjust the viscosity, thereby preparing a paste. The paste was coated onto the current collector foils of Examples 1 to 3 and Comparative Example 1, and then the coated electrodes were dried at 120°C for 10 minutes using a hotplate. Each of the electrodes thus prepared had a thickness of approximately 55$\mu$m, and a density of approximately 2.0g/cm$^3$.

(Preparation of Mono-layer Laminate Cell Samples)

The constituents of the mono-layer laminate cell is shown in Table 2. As the positive electrode, electrodes using the current collector foils of Examples 1 to 3 and Comparative Example 1 and $LiFePO_4$-based active materials were used. As the negative electrode, electrodes using mesocarbon microbeads (MCMB) as the active material was used. The other constituents as shown in Table 2 were used in the preparation of the mono-layer laminate cell samples. The

9

electrodes were dried at 170°C (under vacuum) for 10 hours.

[Table 2]

| Positive Electrode | Composition | $LiFePO_4$/AB/PVDF=9/5/5 |
|---|---|---|
| | Thickness | 55$\mu$m |
| | Density | 2.0g/cm$^3$ |
| | Size | 14x20 mm |
| Negative Electrode | Composition | MCMB/AB/PVDF=93/2/5 |
| | Thickness | 39$\mu$m |
| | Density | 1.3g/cm$^3$ |
| | Size | 15x21 mm |
| Separator | | General purpose PE microporous membrane |
| Electrolyte | | 1M-$LiPF_6$ EC/MEC (3:7) |
| Opposing area | | 2.8 cm$^2$ |
| Outer package | | Al laminate |

(Discharge Rate Characteristics)

The mono-layer laminate cell samples prepared by using the current collector foils of Examples 1 to 3 and Comparative Example 1 were used to measure the discharge rate characteristics for 0.2C, 0.5C, 1C, 2C, and 5C at 25°C. The discharge capacity maintenance rates (%) obtained by taking the discharge capacity at 0.2C as 100 are shown in Table 3.

[Table 3]

| Discharge capacity maintenance rate (%) | Battery sample (Example 1) | Battery sample (Example 2) | Battery sample (Example 3) | Battery sample (Comparative Example 1) |
|---|---|---|---|---|
| 0.2 C | 100 | 100 | 100 | 100 |
| 0.5 C | 98.6 | 98.3 | 97.7 | 97.5 |
| 1 C | 96.9 | 97.5 | 96.6 | 95.2 |
| 2 C | 94.9 | 94.6 | 94.3 | 91.3 |
| 5 C | 91.2 | 88.1 | 89.7 | 82.9 |

When the discharge rate is 0.5C, there was no significant difference among the battery samples. When the discharge rate was as large as 5C, the discharge capacity maintenance rate fell to approximately 80% with the battery sample using the current collector foil of Comparative Example 1. On the other hand, the discharge capacity maintenance rate remained at approximately 90% with the battery samples using the current collector foils of Examples 1 to 3. Accordingly, it can be concluded that the current collector foils of the present Examples are superior in discharging and charging characteristics at high rate.

**EXPLANATION OF SYMBOLS**

100, 200: current collector foil
102, 202: metal foil
103: resin material layer
105, 205: active material layer
109, 209: roughened portion
110, 210: electrode structure

117: cross sectional curve
111, 119: active material particles

## Claims

1. A current collector foil (100, 200) for forming thereon an active material layer (105, 205) containing active material particles (111, 119), wherein:

   the current collector foil (100, 200) is provided with a roughened portion (109, 209);
   a cross sectional curve of the roughened portion (109, 209) has a box counting dimension as measured with a method according to paragraphs [0031] to [0035] of 1.1 or higher; and
   an average length of waviness motif AW of the cross-sectional curve of the roughened portion (109, 209) as measured with a method according to paragraphs [0038] to [0039] is longer than twice of D10, D10 being a particle diameter of the active material particle (111, 119) in particle size cumulative distribution, the active material particles (111, 119) being used for the active material layer formed on the current collector foil (100, 200).

2. The current collector foil (100, 200) of Claim 1, comprising:

   a metal foil (102, 202); and
   a resin material layer (103) provided on the metal foil (102, 202); wherein
   the resin material layer (103) contains conductive particles and a binder resin, and
   the roughened portion (109, 209) is structured by the resin material layer (103).

3. The current collector foil (100, 200) of Claim 2, wherein the conductive particles are carbon fine particles.

4. The current collector foil (100, 200) of Claim 2, wherein the binder resin contains one type or a combination of two or more types of substance selected from the group consisting of a polyolefin resin, an SBR, a polyimide resin, cellulose and derivatives thereof, chitin and derivatives thereof, chitosan and derivatives thereof, an acryl resin, a butyral resin, a melamine resin, and an epoxy resin.

5. An electrode structure (110, 210), comprising:

   a current collector comprising the current collector foil (100, 200) of any one of Claims 1 to 4; and
   an active material layer (105, 205) containing the active material particles (111, 119), the active material layer (105, 205) being provided on the current collector.

6. A lithium secondary battery, comprising:

   a current collector comprising the current collector foil (100, 200) of any one of Claims 1 to 4; and
   an active material layer (105, 205) containing the active material particles (111, 119), the active material layer (105, 205) being provided on the current collector.

7. An electrical double layer capacitor, comprising:

   a current collector comprising the current collector foil (100, 200) of any one of Claims 1 to 4; and
   an active material layer (105, 205) containing the active material particles(111, 119), the active material layer (105, 205) being provided on the current collector.

## Patentansprüche

1. Stromabnehmerfolie (100, 200) zur Ausbildung einer Aktivmaterialschicht (105, 205), die Aktivmaterialpartikel (111, 119) enthält, auf derselben, wobei:

   die Stromabnehmerfolie (100, 200) mit einem aufgerauten Abschnitt (109, 209) versehen ist;
   eine Querschnittskurve des aufgerauten Abschnitts (109, 209) eine Box-Counting-Dimension, gemessen mit einer Methode gemäß den Absätzen [0031] bis [0035], von 1,1 oder höher aufweist; und

eine mittlere Länge des Welligkeitsmotifs AW der Querschnittskurve des aufgerauten Abschnitts (109, 209), gemessen mit einer Methode gemäß den Absätzen [0038] bis [0039], größer als das Zweifache von D10 ist, wobei D10 ein Teilchendurchmesser des Aktivmaterialpartikels (111, 119) in der kumulativen Partikelgrößenverteilung ist, wobei die Aktivmaterialpartikel (111, 119) für die auf der Stromabnehmerfolie (100, 200) ausgebildete Aktivmaterialschicht verwendet werden.

2. Stromabnehmerfolie (100, 200) nach Anspruch 1, umfassend:

eine Metallfolie (102, 202); und
eine Harzmaterialschicht (103), vorgesehen auf der Metallfolie (102, 202); wobei
die Harzmaterialschicht (103) leitfähige Partikel und ein Bindemittelharz enthält, und
der aufgeraute Abschnitt (109, 209) durch die Harzmaterialschicht (103) strukturiert ist.

3. Stromabnehmerfolie (100, 200) nach Anspruch 2, wobei die leitfähigen Partikel feine Kohlenstoffpartikel sind.

4. Stromabnehmerfolie (100,200) nach Anspruch 2, wobei das Bindemittelharz eine Stoffart oder eine Kombination von zwei oder mehreren Stoffarten, ausgewählt aus der Gruppe bestehend aus einem Polyolefinharz, einem Styrol-Butadien-Kautschuk (SBR), einem Polyimidharz, Cellulose und Derivaten davon, Chitin und Derivaten davon, Chitosan und Derivaten davon, einem Acrylharz, einem Butyralharz, einem Melaminharz und einem Epoxidharz, enthält.

5. Elektrodenstruktur (110, 210), umfassend:

einen Stromabnehmer, umfassend die Stromabnehmerfolie (100,200) nach einem der Ansprüche 1 bis 4; und
eine Aktivmaterialschicht (105, 205), enthaltend die Aktivmaterialpartikel (111, 119), wobei die Aktivmaterialschicht (105, 205) auf dem Stromabnehmer vorgesehen ist.

6. Lithiumsekundärbatterie, umfassend:

einen Stromabnehmer, umfassend die Stromabnehmerfolie (100,200) nach einem der Ansprüche 1 bis 4; und
eine Aktivmaterialschicht (105, 205), enthaltend die Aktivmaterialpartikel (111, 119), wobei die Aktivmaterialschicht (105, 205) auf dem Stromabnehmer vorgesehen ist.

7. Elektrischer Doppelschichtkondensator, umfassend:

einen Stromabnehmer, umfassend die Stromabnehmerfolie (100,200) nach einem der Ansprüche 1 bis 4; und
eine Aktivmaterialschicht (105, 205), enthaltend die Aktivmaterialpartikel (111, 119), wobei die Aktivmaterialschicht (105, 205) auf dem Stromabnehmer vorgesehen ist.

**Revendications**

1. Feuille collectrice de courant (100, 200) destinée à former une couche supérieure de matériau actif (105, 205) sur laquelle contenant des particules de matériau actif (111, 119), où :

la feuille collectrice de courant (100, 200) est pourvue d'une section rugueuse (109, 209) ;
une courbe de profil de la section rugueuse (109, 209), mesurée au moyen d'un procédé conforme aux paragraphes [0031] à [0035], a une dimension de boîtes égale ou supérieure à 1.1;
et une longueur moyenne de motif d'ondulation moyenne AW du profil de la section rugueuse (109, 209), mesurée au moyen d'un procédé conforme aux paragraphes [0038] à [0039], est supérieure à deux fois D10, D10 étant un diamètre de particule de matériau actif (111, 119) dans la distribution cumulative des grandeurs de particule, les particules de matériau actif (111, 119) étant utilisées pour la couche de matériau actif formée sur la feuille collectrice de courant (100, 200).

2. Feuille collectrice de courant (100, 200) selon la revendication 1, comprenant :

une feuille métallique (102, 202) ; et
une couche de résine (103) prévue sur la feuille métallique (102, 202) ; où
la couche de résine (103) contient des particules conductrices et une résine liante, et

la section rugueuse (109, 209) est structurée par la couche de résine (103).

3. Feuille collectrice de courant (100, 200) selon la revendication 2, où les particules conductrices sont des particules fines de carbone.

4. Feuille collectrice de courant (100, 200) selon la revendication 2, où la résine liante contient un type de substance, ou une combinaison de deux ou de plusieurs types de substances sélectionnées dans le groupe composé d'une résine polyoléfine, d'un caoutchouc butadiène-styrène, d'une résine polyimide, de cellulose et de dérivés de celle-ci, de chitine et de dérivés de celle-ci, de chitosane et de dérivés de celui-ci, d'une résine acrylique, d'une résine de butyral, d'une résine de mélamine et d'une résine époxy.

5. Structure d'électrode (110, 210), comprenant :

   un collecteur de courant comprenant la feuille collectrice de courant (100, 200) selon l'une des revendications 1 à 4 ; et
   une couche de matériau actif (105, 205) contenant les particules de matériau actif (111, 119), ladite couche de matériau actif (105, 205) étant prévue sur le collecteur de courant.

6. Batterie secondaire au lithium, comprenant :

   un collecteur de courant comprenant la feuille collectrice de courant (100, 200) selon l'une des revendications 1 à 4 ; et
   une couche de matériau actif (105, 205) contenant les particules de matériau actif (111, 119), ladite couche de matériau actif (105, 205) étant prévue sur le collecteur de courant.

7. Condensateur électrique à double couche, comprenant :

   un collecteur de courant comprenant la feuille collectrice de courant (100, 200) selon l'une des revendications 1 à 4 ; et
   une couche de matériau actif (105, 205) contenant les particules de matériau actif (111, 119), ladite couche de matériau actif (105, 205) étant prévue sur le collecteur de courant.

[FIG. 1]

[FIG. 2]

[FIG. 3]

**EP 2 874 214 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010212167 A
- US 20090017381 A1
- JP 2010153224 A